# EUROPEAN PATENT SPECIFICATION

(11) **EP 2 953 185 B1**
(45) Date of publication and mention of the grant of the patent: **13.06.2018**
(21) Application number: 13873568.3
(22) Date of filing: 10.05.2013
(51) Int. Cl.: H01M 2/20, H01M 2/04, H01M 2/10, H01M 10/0525, H01M 10/48, H01M 10/42

(54) **MULTIFUNCTIONAL BATTERY COVER AND POWER BATTERY PACK THEREOF**
MULTIFUNKTIONELLE BATTERIEABDECKUNG UND STROMBATTERIEPACK
CACHE DE BATTERIE MULTIFONCTION ET PACK DE BATTERIE ÉLECTRIQUE ASSOCIÉ

(30) Priority: 31.01.2013 CN 201310039492
(43) Date of publication of application: 09.12.2015
(73) Proprietor: Hubei Surpass Sun Electric Co., Ltd., Xiangyang, Hubei 441003 (CN)
(72) Inventor: CHEN, Jianguo, Xiangyang Hubei 441003 (CN); XU, Yangbo, Xiangyang Hubei 441003 (CN); SUN, Yuhong, Xiangyang Hubei 441003 (CN); WANG, Weijun, Xiangyang Hubei 441003 (CN)
(74) Representative: Peters, Sebastian Martinus
(86) International application number: PCT/CN2013/075448
(87) International publication number: WO 2014/117453

(56) References cited:
- EP-A1- 2 352 186
- WO-A1-2012/131809
- CN-A- 101 938 016
- CN-A- 102 339 969
- CN-A- 102 779 954
- US-A1- 2012 003 505
- US-A1- 2012 115 015
- US-A1- 2012 148 877

## Description

### TECHNICAL FIELD

The invention relates to the field of electric vehicle and energy storage, more specifically, it relates to a multifunctional battery cover and power battery pack thereof.

### BACKGROUND

Power storage battery is developed rapidly as a primary storage of power. The resolving of the battery energy storage problem provides a foundation of the new energy power generation such as solar power and wind power, and distributed power, electric vehicle which can be rapidly promoted. Meanwhile, the charging and energy storage of the power storage battery has many problems in development, such as energy storage efficiency, service life, the utilization of the rechargeable battery, the self discharge, safety, reliability, the stability of charging and discharging, and equalization of a plurality of single batteries, and has the problems including the small capacity of single battery, great weight, requiring a plurality of single batteries to be in series or in parallel to achieve curtain voltage and current of capacity, these problems are interacted to decrease the energy storage efficiency and reliability of the power storage battery directly, thus the operating cost is increased to obstruct the development of the new energy power field.

At present, the single battery cell of the battery package has two kinds of lines---a primary line and a control line of the battery. The primary line is the connection bus between the single battery cell and battery, it is used between the batteries in series or in parallel to form the required service capacity, and it is required to bear large current; the control line is configured to detect and current equalize, to detect the state of charge of the single storage battery, to control the charging, discharging and maintenance.

Because the battery package and battery management system (BMS) have the issues of many connection lines, confused wires, heavy workload, easiness mistake, and banding the control detection signal lines connected to the BMS along the body of the battery is dangerous, which is easy to generate signal interference during the control progress. The interference impacts the effect of battery detection and accuracy of the current equalization control, and it further impacts the service life of the battery. Meanwhile, the two ends of the battery have voltage, which causes the inconvenience of maintenance and changing for the battery, even the possibility of electric shock.

The present power battery package has no cover, usually the control line is pressed by the big line nose and fixed on the terminal outgoing lines together with the primary line. This connection manner of the big line and small line using one connection point often causes the connection looseness, detaching, mildew, dust accumulation, poor contact or even electrolysis damage due to the long-term variation of charging and discharging of direct current, variation of high or low temperature of environment, movement and jolt course, thus it is easy to accelerate the discharging corrosion, loose or falling off of the connection terminal, or even the ignition, sometimes it causes a fire and an explosion of the battery.

Patent publication WO 2012/131809 is considered to be prior art and relates to a battery module, battery system, electric vehicle, mobile body, power storage device, power supply device and electric equipment.

### SUMMARY OF THE INVENTION

The technical issue the invention intend to resolve is to overcome the disadvantage of the wiring of in the battery package of the prior art being easy to generate signal interference, loose and damage, impacting the effect of the detection of the battery in the box, and to provide a multifunctional battery cover and power battery pack thereof which has a simple and reliable assembly and strong anti-interference capability.

The invention resolves the above issues by the following technical scheme: a multifunctional battery cover comprises a cover body, a plurality of leading-out terminals disposed on the cover body, and at least one electric signal collecting unit, an input end of each electric signal collecting unit is connected with a single battery cell in the battery pack, an output end of each electric signal collecting unit is connected with one of the leading-out terminals, the leading-out terminals are all connected with a battery management system, and are used for transmitting collected voltage information of the battery pack to the battery management system;
wherein the electric signal collecting unit at least comprises: a wire and a conductive elastic connector for connecting to the single battery cell, wherein one end of the conductive elastic connector is electrically connected with the wire, the other end of the conductive elastic connector is electrically connected with the single battery cell;
wherein the cover body is a multilayer insulating cover body, the wire is configured in the internal of the cover body.

The leading-out terminals of the scheme is used for leading out all the wires to connect external part, such as standard parts, to insert or press on the cover body. The leading-out terminals of the multifunctional battery cover send the collected electric signal of each single battery in the battery package to the external battery management system, the performance of the battery cell can be effectively controlled and detected. The connection manner of the invention can avoid the impact caused by the nut face of the same fixation column locking the power line of large current and control line of the micro current simultaneously, avoid the looseness of the connection line and the electrolytic corrosion, to keep the normal operation of the battery package and prolong the service life of the battery. Meanwhile the isolation of the battery cover enables the electric leading part of the top of the single battery package to decrease the accumulation of the dust, and avoids the abnormal electric connection of the immerging of the conductive object, increases the safety of the battery package.

The scheme can collect the electric signal of the single battery cell by a conductive elastic connector which is conductive and deformable (that is: a connector which is conductive and deformable, such as an elastic connection sheet or a connection spring), to control and detect the service capacity of the battery package, separate the primary line and the control line at the connection point fixed surface, to divide the big line and small line, and increase the reliability.

Preferably, the conductive elastic connector comprises an elastic connection sheet.

Preferably, the conductive elastic connector further comprises a connection spring which is in parallel to the sheet connection sheet. Thus the electric flexible connection between the connection spring and single battery cell is further strengthened, and it assists the position and further strengthens the electric connection of the signal lines, strengthens the reliability of the electric connection.

Preferably, the connection spring is pressed on the corresponding fixation column of the single battery cell to meet the request of the electrical wiring to form an electrical connection. By configuring a connection spring on the conductive elastic connector, the multifunctional battery cover and the single battery cell in the power battery pack of the invention can be connected flexibly, so that even in the vehicle driving in high speed, the connection can not be damaged by the shaking of the battery box, to make the connection between the power battery package and battery management system more reliable.

Preferably, the plurality of leading-out terminals comprise a plurality of electric signal collecting port and a plurality of current equalization signal collecting port, each electric signal collecting port further comprises a fuse, two ends of each fuse are connected with each current equalization signal collecting port and corresponding electric signal collecting port, so that the leading-out terminals of the multifunctional battery cover send the collected electric signals of each battery cell in the battery pack to the corresponding port of the external battery management system, thus achieving voltage detection and current equalization control during charging.

Preferably, a wire duct configured for contain and collect the wiring harness to the leading-out terminals is formed on the internal bottom surface of the cover body. Setting the wiring harness of the battery management system in the wire duct of the "cover body", on the one hand, can protect the wire from exposing; on the other hand, can shield electromagnetic interference, to prevent the wiring harness from interference; meanwhile the wire in the cove body is configured in the wire duct, so that the appearance is neat and beauty, the cover body is easy to disassemble and assemble without mistake.

Preferably, a plurality of vents are configured on the cover body.

The invention provides a power battery pack including a battery box and a plurality of single battery cells fixed in the battery box, wherein the power battery pack further comprises the multifunctional battery cover described as above. Preferred, a plurality of fastening bolt holes are configured on the multifunctional battery cover and the multifunctional battery cover is fixed on the battery box through a plurality of fastening bolts.

Preferably, every two adjacent signal battery cells are connected by a battery connector, to form the required service capacity of the battery package between the batteries.

Preferably, the battery connector is a T-shape battery connection piece, the horizontal edge of the T-shape battery connection piece is configured to connect with two fixation columns of the single battery cell, and is configured to bear the large current of the battery package by the fastening of the nut; the vertical edge of the T-shape battery connection piece is led out to be pressed on the conductive elastic connector of the multifunctional battery cover, to send the signal to the leading-out terminals of the multifunctional battery cover to provide the detection signal of the single battery cell and/or achieve current equalization during charging. The conductive elastic connector of the embodiment is a connection spring.

Preferably, a battery fixed mount is configured on the multifunctional battery cover; the battery fixed mount presses against the signal battery cell of the battery package at its top.

Preferably, the battery fixed mount is fixed under the multifunctional battery cover, and is embedded in the single battery cell of the battery box. This can ensure that the electric connection between the multifunctional battery cover and the battery package is normal, so that the multifunctional battery cover is stable.

Based on the common knowledge in the field, the above preferred conditions can be combined randomly to obtain the preferred embodiments of the invention.

The benefit effect of the invention is:
1. The leading-out terminals of the multifunctional battery cover of the invention send the collected electric signal of each single battery in the battery package to the external battery management system, thus achieving dual effects of voltage detection and current equalization during charging and discharging; therefore, the performance of the battery cell can be effectively controlled and detected, the charge discharge efficiency is increased, and the service life of the battery is prolonged.
2. Furthermore, the invention separates the primary line connected to the big current of the single battery cell of the power storage battery from the control line of the small current at the connection point, it solves the problem on electrical connection between the battery inside the power storage battery package and the battery management system which controls the charging effect or the reliable application thereof, increases the service life efficiently and decreases the maintenance.
3. The connection, assembling and maintenance between the battery package and the battery management system is convenient, the connection part of the battery package is separated from the sundries, thus it is safe and it is easy for standardized production and operation.

### BRIEF DESCRIPTION OF THE DRAWINGS

The accompanying drawings, together with the specification, illustrate exemplary embodiments of the present disclosure, and, together with the description, serve to explain the principles of the present invention.
Figure 1 is the section view of the multifunctional battery cover according to the invention.
Figure 2 is the top view of Figure 1.
Figure 3 is the section view after the connection between the multifunctional battery cover and the battery package.
Figure 4 is the top view after the connection between the multifunctional battery cover and the battery package in Figure 3.
Figure 5 is the electric connection view of the connection between the multifunctional battery cover and the power battery package.
Figure 6a is the partial enlarged view of the wire of I section in Figure 3 being connected with the fixation column of one single battery cell in Embodiment 1.
Figure 6b is the partial enlarged view of the wire of I section in Figure 3 being connected with the fixation column of the other single battery cell in Embodiment 2 including connection spring.
Figure 7a is the partial enlarged view of the wire of I section in Figure 3 being connected with the fixation column of the other single battery cell in Embodiment 2 without including connection spring.
Figure 7b is the partial enlarged view of the wire of I section in Figure 3 being connected with the fixation column of the other single battery cell in Embodiment 2 including connection spring.
Figure 8 is the assembling section view of the multifunctional battery cover and the power battery package in Embodiment 4.
Figure 9 is the top view of the electric connection of the multifunctional battery cover and the power battery package in Figure 8.

### DETAILED DESCRIPTION OF THE INVENTION

The following further explains the invention through the embodiment, but the scope of the invention could not be limited in the embodiment. The experimental method without indicating the specific condition in the following embodiment, can be according to the regular method and condition, or can be selected by the specification.

### Embodiment 1

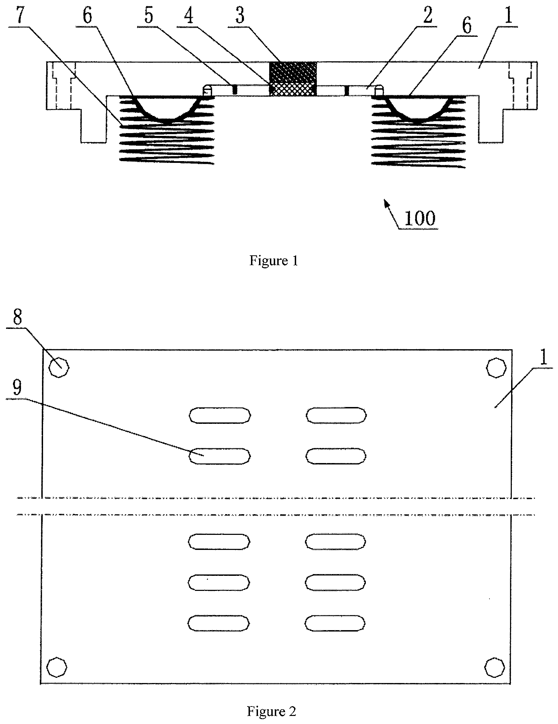

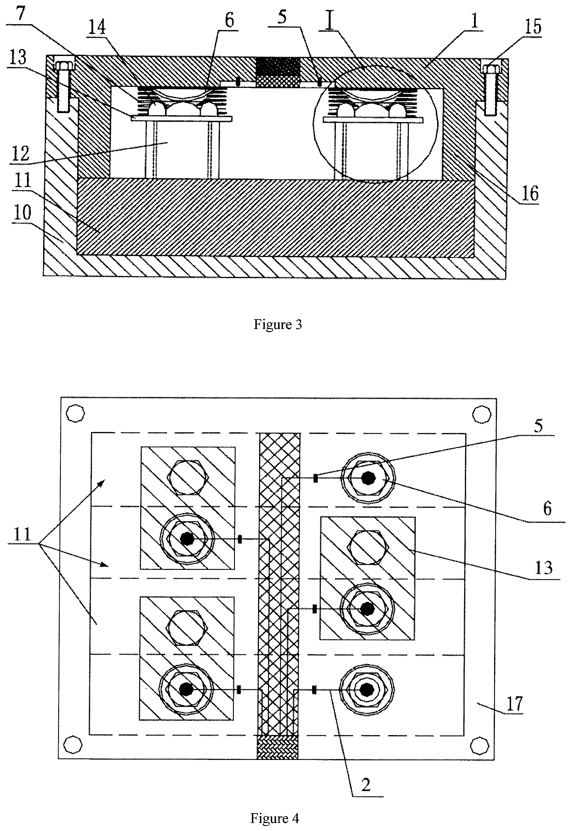

Refer to Figure 1-4, a multifunctional battery cover, wherein comprises a cover body 1, a leading-out terminal 3 disposed on the cover body 1, and at least one electric signal collecting unit, an input end of each electric signal collecting unit is connected with a single battery cell 11 in the power battery pack 17 (see Figure 4), an output end of each electric signal collecting unit is connected with a leading-out terminal 3, a plurality of leading-out terminals 3 are all connected with a battery management system, and are used for transmitting collected voltage information of the power battery pack to the battery management system.

The electric signal collecting unit comprises: a wire 2 and a conductive elastic connector, wherein one end of the conductive elastic connector is electrically connected with the wire 2, the other end of the conductive elastic connector is electrically connected with the single battery cell 11. Wherein, the conductive elastic connector can be an elastic connection sheet 6.

The cover body 1 is a multilayer insulating cover body, the wire 2 is configured in the internal of the cover body, the upper layer of the cover body has no wiring harness to separate and insulate the wire. The battery cover can have a mass production as an entirety, and the assembling is convenient and fast without wasting the time on connecting the primary line and the control line. The battery cover is beautiful and neat, and the working efficiency is increased.

Refer to Figure 2, a vent is configured on the cover body 1 of the multilayer insulating cover.

Furthermore, refer to Figure 1, the cover body has a wire duct 4 configured for contain and collect the wiring harness to the leading-out terminals, then the wiring harness is connected with the battery management system by the leading-out terminals, the wiring harness is insulated to each other. Setting the wiring harness of the battery management system in the wire duct of the "cover body", on the one hand, can protect the wire from exposing; on the other hand, can shield electromagnetic interference, to prevent the wiring harness from interference; meanwhile the connection manner of wire in the cove body is fixed without mistake. Furthermore, the wiring harness is configured on the wire duct, thus the appearance is neat and beauty.

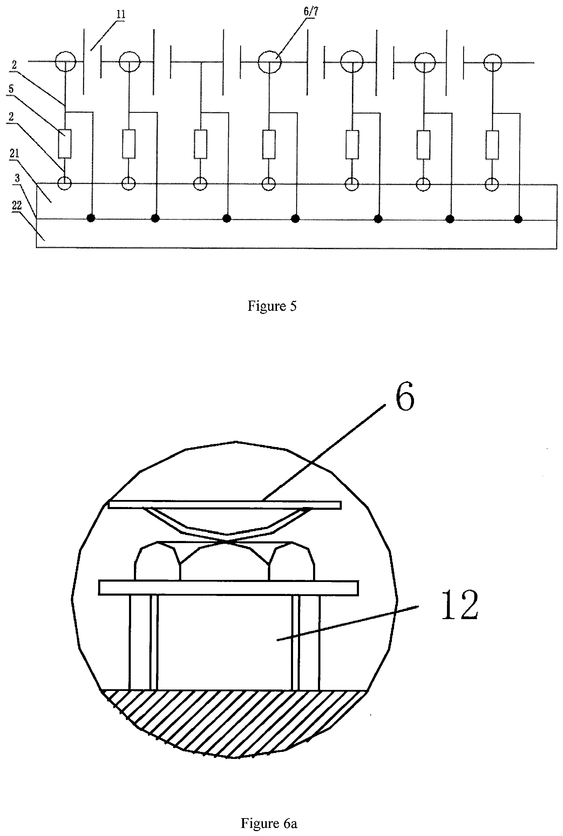

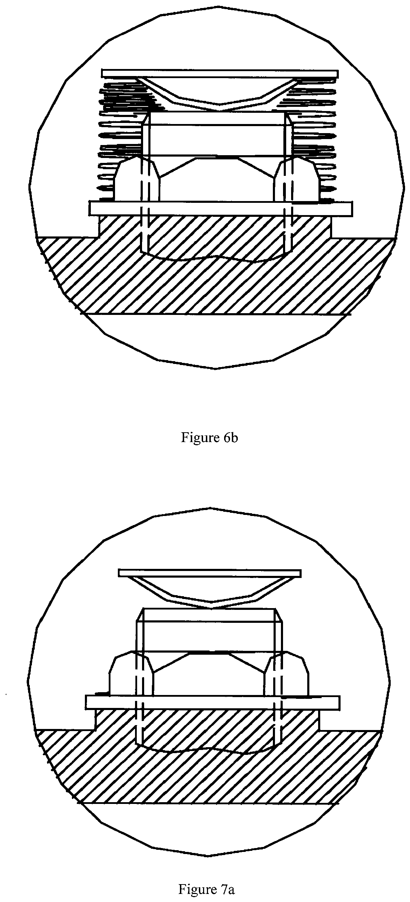

Refer to Figure 3, the single battery cell 11 of the embodiment can be a single lithium-ion power storage battery. Refer to Figure 6-7, a plurality of leading-out terminals 3 comprises several electric signal collecting ports. The electric signal collecting unit comprises: a wire and a conductive elastic connector, such as an elastic connection sheet 6, one end of the conductive elastic connector is electrically connected with the wire, the other end of the conductive elastic connector is flexibly electrically connected with the fixation column 12 of the single battery cell 11. The wire is connected with the electric signal collecting port to send the collected electric signals to the external battery management system, to better detect the voltage of the control battery package and the corresponding electric signal.

Based on the above multilayer insulating cover, the invention further provides a power battery package. Refer to Figures 3-4, the power battery package is made up of multilayer insulating cover 100 (see Figure 1), a battery box 10 and a plurality of single battery cells 11 fixed in the battery box 10.

Refer to Figure 4, every two adjacent signal battery cells 11 are connected by a battery connector 13, such as a transverse line shape of battery connector, to form the charge and discharge loop of the required service capacity between the signal battery cells 11.

To keep the stability of the signal battery cells of the battery box during operation, a one-piece battery fixed mount is configured on the multifunctional battery cover 100 (see Figure 3), to support on the top of the signal battery cell 11 in the power battery package, and is embedded on the signal battery cell in the battery box.

A fastening bolt hole 8 is configured in the cover body 1 (see Figure 2), the cover body 1 is fixed on the battery box 10 of the power battery package 17 by the fastening bolt 15 (see Figure 3). The battery box is configured for fixing the single battery cell to be an ensemble, it can be slot type with air vents in the surroundings, or can be frame type. The fastening bolt 15 is configured to fix the multifunctional battery cover 100 on the battery box 10, to ensure that the electric connection between the battery cover and power battery package is normal, to keep the stability of the multifunctional battery cover. The shape of the battery cover is fitted with the shape of the battery box 10.

The assembling method of the invention is as follows:
1. Cover the fastening bolt in the fastening bolt hole of the battery cover, to keep the fastening bolt perpendicular;
2. Fit the battery cover on the battery package box, the conductive elastic connector is in respect with the single battery cell leading-out fixation column, the hole of the battery cover is aligned with the connection hole of the battery box;
3. Fasten the fixing nut, fix and connect the battery cover and the battery box, the conductive elastic connector is pressed on the corresponding single battery cell leading-out fixation column;
4. The leading-out wiring terminal of the battery cover is electrically connected with the BMS leading-out terminal.

### Embodiment 2

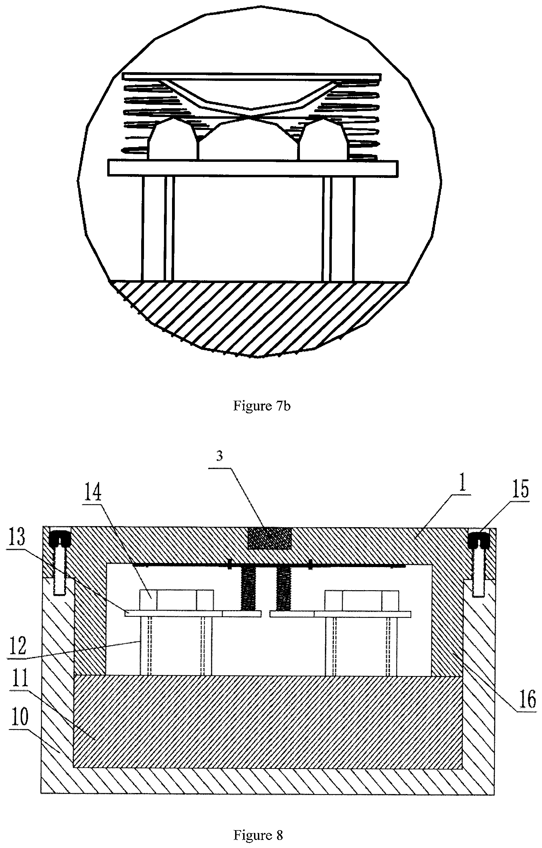

Refer to Figure 1, the difference between the embodiment and Embodiment 1 is, the conductive elastic connector of the embodiment further comprises: a connection spring 7 (see Figure 3, Figure 7b) which is parallel to the elastic connection sheet 6. Specifically, the connection spring can be configured on the single battery cell leading-out the fixation column, so that the flexible electric connection between the elastic connection sheet and the battery is strengthened, meanwhile it can assists the position and further strengthens the electric connection of the signal lines, strengthens the reliability of the electric connection. For example, the connection spring can be soldered on the leading-out point of the wire, so that the elastic connection sheet 6 (or connection spring) can flexible connect to the fixation column 12 (see Figure 3) of the single battery cells 11, to buffer when the battery box is shaking, to ensure that the single battery cell is electrically connected to the battery management system efficiently.

Furthermore, refer to Figure 2, a vent 9 is configured on the cover body 1 of the multifunctional battery cover 100.

In Figure 1, a wire duct 4 is configured in the cover body 1, the wire duct 4 is configured for contain and collect the wiring harness to the leading-out terminals 3, then the wiring harness is connected with the battery management system by the leading-out terminals 3, the wire 2 is insulated to each other. Setting the wire of the battery management system in the wire duct of the "cover body", on the one hand, can protect the wire 2 from exposing on the outside and on the single battery cell; on the other hand, can shield electromagnetic interference, to prevent the wire 2 from interference; meanwhile the connection manner of wire in the cove body is fixed without mistake. Furthermore, the wire is configured on the wire duct, thus the appearance is neat and beauty.

The single battery cell of the embodiment can be a single lithium-ion power storage battery. A plurality of leading-out terminals 3 comprises electric signal collecting ports. Refer to Figure 3, the electric signal collecting unit comprises: a wire and a conductive elastic connector, such as an elastic connection sheet, one end of the conductive elastic connector is connected with the wire 2, the other end of the conductive elastic connector is electrically connected with the fixation column 12 of the single battery cell 11. A nut 14 is configured on the fixation column 12. The wire is connected with the electric signal collecting port to send the collected electric signals to the external battery management system, to better detect the charging and discharging of the control battery package.

Based on the multilayer insulating cover of the embodiment, the invention further provides a power battery package 17. Refer to Figure 3-4, the power battery package 17 is made up of multilayer insulating cover 100, a battery box 10 and a plurality of single battery cells 11 fixed in the battery box 10.

Refer to Figure 4, two adjacent single battery cells 11 are connected by a battery connector 13, such as a transverse line shape of battery connector, to form the required service capacity of the battery package between the single battery cells.

To keep the stability of the single battery cells of the battery box during operation, a one-piece battery fixed mount 16 is configured on the multifunctional battery cover 100, to support on the top of the single battery cell 11 in the power battery package, and is embedded on the single battery cell in the battery box. The shape of the battery cover is fitted with the shape of the connection point of the battery box.

A fastening bolt hole 8 is configured in the cover body 1, the cover body 1 is fixed on the battery box 10 of the battery package by the fastening bolt 15, to ensure that the electric connection between the multifunctional battery cover and battery package is normal, to keep the stability of the multifunctional battery cover.

The other part of the embodiment is same with Embodiment 1.

### Embodiment 3

The difference between the embodiment and Embodiment 2 is, each electric signal collecting unit is connected with a fuse. Meanwhile, a plurality of leading-out terminals are divided into a plurality of electric signal collecting port and a plurality of current equalization signal collecting port, two ends of each fuse 5 are in parallel connected with an electric signal collecting port 22 and a current equalization signal collecting port 21, so that the leading-out terminals of the multifunctional battery cover send the collected electric signals of each battery cell in the battery pack to the corresponding port of the external battery management system, thus achieving dual effects of voltage detection and current equalization during charging; therefore, the performance of the battery cell can be effectively controlled and detected, and the service life of the battery is prolonged.

In Figure 3, there is a multifunctional battery cover of the embodiment. Refer to Figure 3-4, wire 2, an elastic connection sheet 6, a connection spring 7, leading-out terminals are all fixed in the cover body 1. Refer to Figure 5, each wire 2 is connected with an elastic connection sheet 6, each elastic connection sheet 6 is in parallel to a connection spring 7. Each wire, an elastic connection sheet which is in parallel to the wire, and a connection spring make up a branch circuit, namely, the electric signal collecting unit. One end of the branch circuit is connected with the leading-out terminal, the other end of the branch circuit is electrically connected with the fixation column 12 of the single battery cell 11. A nut 14 is configured on the fixation column 12. The nut 14 is configured to fasten the battery connector 13 between two adjacent single battery cells 11. The connection spring 7 is flexibly positioned to the fixation column of the battery, the leading-out terminal is connected to the corresponding port of the external battery management system (not shown).

Refer to Figure 3-5, the elastic connection sheet 6 and the corresponding connection spring 7 are flexibly connected to the single battery cell 11 leading-out fixation column 12 (see Figure 5, Figure 7a-7b), to form the connection of the control circuit.

Refer to Figure 3, the connection spring 7 is configured on the single battery cell 11 leading-out the fixation column 12, so that the flexible electric connection between the elastic connection sheet 6 and the single battery cell 11 is strengthened, meanwhile it can assists the position and further strengthens the electric connection of the signal lines, strengthens the reliability of the electric connection. For example, the connection spring can be soldered on the leading-out point of the wire, so that the elastic connection sheet (or connection spring) can flexibly connect to the fixation column 12 of the single battery cell 11, to buffer when the battery box is shaking, to ensure that the battery is electrically connected to the battery management system efficiently.

Likewise, refer to Figure 2, a vent 9 is configured on the cover body of the multilayer insulating cover.

Furthermore, refer to Figure 1, the cover body has a wire duct 4 configured for contain and collect the wiring harness to the leading-out terminals, then the wiring harness is connected with the corresponding port of the battery management system by the leading-out terminals, the wiring harness is insulated to each other. Setting the wiring harness of the battery management system in the wire duct of the "cover body", on the one hand, can protect the wire from exposing on the outside and on the single battery cell; on the other hand, can shield electromagnetic interference, to prevent the wiring harness from interference; meanwhile the connection manner of wire in the cove body is fixed without mistake. Furthermore, the wiring harness is configured on the wire duct, thus the appearance is neat and beautiful.

The single battery cell of the embodiment can be a single lithium-ion power storage battery.

Based on the multilayer insulating cover of the embodiment, the invention further provides a power battery package. Refer to Figure 3-4, the power battery package 17 is made up of multilayer insulating cover 100 (see Figure 1), a battery box 10 and a plurality of single battery cells 11 fixed in the battery box 10.

Refer to Figure 4, every two adjacent single battery cells 11 are connected by a battery connector 13, such as a transverse line shape of battery connector, to form the required charging and discharging loop of the service capacity of the battery package between the single battery cells.

To keep the stability of the single battery cells of the battery box during operation, a one-piece battery fixed mount is configured on the multifunctional battery cover, to support on the top of the single battery cell in the power battery package, and is embedded on the single battery cell in the battery box. The shape of the battery cover is fitted with the shape of the battery box.

A fastening bolt hole is configured in the cover body 1, the cover body 1 is fixed on the battery box 10 of the battery package by the fastening bolt 15. The fastening bolt 15 is configured to secure the multifunctional battery cover on the battery box 10, to ensure that the electric connection between the multifunctional battery cover and battery package is normal, to keep the stability of the multifunctional battery cover.

Figure 6a, Figure 6b-7a, Figure 7b show the status diagram in case of the multifunctional battery cover being connected with the different fixation columns of the single battery cell in the battery package according to the invention.

The connection manner by which the multifunctional battery cover and the power battery package is connected, can avoid the nut face of the same fixation column lock the power line of large current and control line of the micro current simultaneously, and utilize the flexible connection manner which the conductive elastic connection sheet and/or the connection spring is pressed on the fixation column, so that even in the vehicle driving in high speed, when the battery box is shaking, the buffer between the multifunctional battery cover and the storage battery is flexibly balanced, to avoid the damage of the wire and ensure the electric connection between the power storage battery and battery management system is efficient.

The invention makes the charging and discharging control line between the power storage battery and battery management system more reliable, makes the connection manner of the battery management system more fixed, and lowers the error probability, increases the efficiency of the system maintenance.

Furthermore, the invention simplifies the wire connection in the battery package, and the maintenance is convenient, so that the assembling and maintenance efficiency of the power battery is increased, the service life of the battery package and the charging management system is prolonged.

### Embodiment 4

The difference between the embodiment and Embodiment 1,2,3 is, refer to Figure 8-9, the battery connector 13 between the single battery cells is changed from a transverse line shape of connector to a T-shape connection piece, one side of the T-shape battery connection piece is configured to electrically connect with two adjacent fixation columns 12 of the single battery cell 11, the other side of the T-shape battery connection piece is configured to flexibly connect the conductive elastic connector. The conductive elastic connector of the embodiment is connection spring.

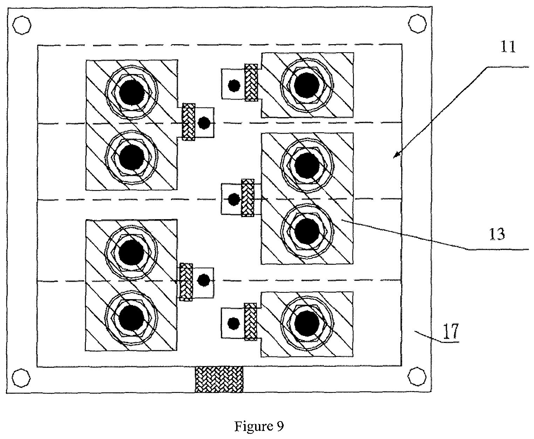

Refer to Figure 8 and Figure 9, the multifunctional battery cover of the embodiment comprises: wiring harness, connection spring or elastic connection sheet, leading-out terminal. The wiring harness, connection spring, leading-out terminal are all fixed in the cover body 1. Wherein, each wire is connected with a connection spring or an elastic connection sheet, each wire and a connection spring make up a branch circuit, namely, the electric signal collecting unit. One end of the branch circuit is connected with the leading-out terminal, the other end of the branch circuit is flexibly electrically connected with one end of the T-shape battery connector 13 of the single battery cell. The leading-out terminal of the multifunctional battery cover is connected with the external battery management system.

Refer to Figure 5 and Figure 9, the horizontal edge of the T-shape battery connection piece is configured to connect with two fixation columns of the single battery cell, and is configured to bear the large current of the battery package by the fastening of the nut; the vertical edge of the T-shape battery connection piece is led out to be pressed on the connection spring or the elastic connection sheet of the multifunctional battery cover, to send the signal to the leading-out terminals of the multifunctional battery cover by the connection spring connected to the wire, to provide the detection signal of the single battery cell and required current equalization.

The advantage of the invention is to improve the shape of the battery connector based on the above description, so that the connection point between the conductive elastic connector of the multifunctional battery cover and the single battery cell, to increase the reliability and universality of the connection, and to optimize the manufacturing technique of the multifunctional battery cover, it is easy for standardized and mass production, and the value of the invention is implemented.

The assembling method of the invention is as follows:
1. Cover the fastening bolt in the fastening bolt hole of the battery cover, to keep the fastening bolt perpendicular;
2. Fit the battery cover on the battery package box, the conductive elastic connector is in respect with the corresponding battery connector between the single battery cells, the hole of the battery cover is aligned with the connection hole of the battery box;
3. Fasten the fixing nut, fix and connect the battery cover and the battery box, the conductive elastic connector is pressed on the corresponding battery connector between the single battery cells;
4. Electrically connect the leading-out wiring terminal of the multifunctional battery cover to the corresponding leading-out terminal of the battery management system. The multifunctional battery cover and the battery package of the invention can be connected by above manner, which can avoid locking the power cable and the signal cable with common bolts which passes through the same fixation column, further avoid corrosion of the signal cable, and ensure the efficient electric connection between the power storage battery and the battery management system.

The invention makes the connection between the power storage battery and the battery management system more reliable, makes the connection manner of the battery management system fixed and convenient, and lowers the error probability, increases the efficiency of the system maintenance. Meanwhile the isolation of the battery cover enables the electric leading part of the top of the single battery package to decrease the accumulation of the dust, and avoids the abnormal electric connection of the immerging of the conductive object, increases the safety of the battery package.

Furthermore, the invention simplifies the wire assembling in the battery package, increases the safety, and the maintenance is convenient, so that the assembling and maintenance efficiency of the power battery is increased, the service life of the battery package and the charging management system is prolonged.

## Claims

1. A multifunctional battery cover (100), comprising: a cover body (1), a plurality of leading-out terminals (3) disposed on the cover body (1), and at least one electric signal collecting unit, an input end of each electric signal collecting unit is connected with a single battery cell (11) in the battery pack (17), an output end of each electric signal collecting unit is connected with one of the leading-out terminals (3), the leading-out terminals (3) are all connected with a battery management system, and are used for transmitting collected voltage information of the battery pack (17) to the battery management system;
wherein the electric signal collecting unit at least comprises: a wire (2) and a conductive elastic connector for connecting to the single battery cell (11), wherein one end of the conductive elastic connector is electrically connected with the wire (2), the other end of the conductive elastic connector is electrically connected with the single battery cell (11);
wherein the cover body (1) is a multilayer insulating cover body, the wire (2) is configured in the internal of the cover body (1).

2. The multifunctional battery cover (100) as claimed in Claim 1, wherein the conductive elastic connector comprises an elastic connection sheet (6).

3. The multifunctional battery cover (100) as claimed in Claim 2, wherein the conductive elastic connector further comprises a connection spring (7) which is in parallel to the elastic connection sheet (6).

4. The multifunctional battery cover (100) as claimed in Claim 3, wherein the connection spring (7) is pressed on the corresponding fixation column (12) of the single battery cell (11) to meet the request of the electrical wiring to form an electrical connection.

5. The multifunctional battery cover (100) as claimed in one of Claims 1-4, wherein the plurality of leading-out terminals (3) comprise a plurality of electric signal collecting port (22) and a plurality of current equalization signal collecting port (21), each electric signal collecting port (22) further comprises a fuse (5), two ends of each fuse (5) are connected with each current equalization signal collecting port (21) and corresponding electric signal collecting port (22), so that the leading-out terminals of the multifunctional battery cover (100) send the collected electric signals of each battery cell (11) in the battery pack (17) to the corresponding port of the external battery management system, thus achieving voltage detection and current equalization control during charging.

6. The multifunctional battery cover (100) as claimed in Claim 5, wherein a wire duct (2) configured for contain and collect the wiring harness to the leading-out terminals is formed on the internal bottom surface of the cover body (1).

7. The multifunctional battery cover (100) as claimed in Claim 6, wherein a plurality of vents (9) are configured on the cover body (1).

8. A power battery pack (17) comprises a battery box (10) and a plurality of single battery cells (11) fixed in the battery box (10), wherein the power battery pack (17) further comprises the multifunctional battery cover (100) as claimed in any one of Claims 1-7.

9. The power battery pack (17) as claimed in Claim 8, wherein a plurality of fastening bolt holes (8) are configured on the multifunctional battery cover (100) and the multifunctional battery cover (100) is fixed on the battery box (10) through a plurality of fastening bolts (15) .

10. The power battery pack (17) as claimed in Claim 9, wherein every two adjacent single battery cells (11) are connected by a battery connector (13), to form the required service capacity of the battery package (17) between the batteries.

11. The power battery pack (17) as claimed in Claim 10, wherein the battery connector (13) is a T-shape battery connection piece, the horizontal edge of the T-shape battery connection piece is configured to connect with two fixation columns (12) of the single battery cell (11), and is configured to bear the large current of the battery package (17) by the fastening of the nut (14); the vertical edge of the T-shape battery connection piece is led out to be pressed on the conductive elastic connector of the multifunctional battery cover (100), to send the signal to the leading-out terminals (3) of the multifunctional battery cover (100) to provide the detection signal of the single battery cell (11) and/or achieve current equalization during charging.

12. The power battery pack (17) as claimed in any one of Claims 8-11, wherein a battery fixed mount (16) is configured on the multifunctional battery cover (100); the battery fixed mount (16) presses against the single battery cell (11) of the battery package (17) at its top.

13. The power battery pack (17) as claimed in Claim 12, wherein the battery fixed mount (16) is fixed under the multifunctional battery cover (100), and is embedded in the single battery cell (11) of the battery box (10) .

## Patentansprüche

1. Eine multifunktionale Batterieabdeckung (100) umfassend: einen Abdeckungskörper (1), eine Mehrzahl an herausführenden Anschlüssen (3), die auf dem Abdeckungskörper (1) angeordnet sind, und wenigstens eine elektrisches Signal sammelnde Einheit, wobei ein Eingangsende von jeder elektrisches Signal sammelnden Einheit mit einer einzelnen Batteriezelle (11) in dem Batteriepack (17) verbunden ist, ein Ausgangsende von jeder elektrisches Signal sammelnden Einheit mit einem der herausführenden Anschlüsse (3) verbunden ist, die herausführenden Anschlüsse (3) alle mit einem Batterie-Managementsystem verbunden sind und verwendet werden, um gesammelte Spannungsinformation über das Batteriepack (17) an das Batterie-Managementsystem zu übermitteln;
wobei die elektrisches Signal sammelnde Einheit wenigstens umfasst:
eine Leitung (2) und ein leitfähiges elastisches Verbindungselement zum Verbinden mit der einzelnen Batteriezelle (11), wobei ein Ende des leitfähigen elastischen Verbindungselements elektrisch mit der Leitung (2) verbunden ist, das andere Ende des leitfähigen elastischen Verbindungselements elektrisch mit der einzelnen Batteriezelle (11) verbunden ist;
wobei der Abdeckungskörper (1) ein mehrschichtiger isolierender Abdeckungskörper ist, die Leitung (2) in dem Innern des Abdeckungskörpers (1) angeordnet ist.

2. Die multifunktionale Batterieabdeckung (100) wie in Anspruch 1 beansprucht, wobei das leitfähige elastische Verbindungselement eine elastische Verbindungsplatte (6) umfasst.

3. Die multifunktionale Batterieabdeckung (100) wie in Anspruch 2 beansprucht, wobei das leitfähige elastische Verbindungselement des Weiteren eine Verbindungsfeder (7), die parallel zu der elastischen Verbindungsplatte (6) ist, umfasst.

4. Die multifunktionelle Batterieabdeckung (100) wie in Anspruch 3 beansprucht, wobei die Verbindungsfeder (7) auf die korrespondierende Fixierungssäule (12) der einzelnen Batteriezelle (11) gepresst wird, um das Erfordernis der elektrischen Verdrahtung zur Ausbildung einer elektrischen Verbindung zu erfüllen.

5. Die multifunktionale Batterieabdeckung (100) wie in einem der Ansprüche 1 bis 4 beansprucht, wobei die Mehrzahl an herausführenden Anschlüssen (3) eine Mehrzahl an elektrisches Signal sammelnden Ports (22) und eine Mehrzahl an Stromausgleichssignal-sammelnden Ports (21) umfasst, jeder elektrisches Signal sammelnde Port (22) des Weiteren eine Sicherung (5) umfasst, zwei Enden von jeder Sicherung (5) mit jedem Stromausgleichssignal sammelnden Port (21) und korrespondierendem elektrisches Signal sammelnden Port (22) verbunden sind, so dass die herausführenden Anschlüsse der multifunktionalen Batterieabdeckung (100) die gesammelten elektrischen Signale von jeder Batteriezelle (11) in dem Batteriepack (17) an den korrespondierenden Port des externen Batterie-Managementsystems senden, dadurch erreichend eine Spannungsdetektion und Stromausgleichsregelung während des Ladens.

6. Die multifunktionale Batterieabdeckung (100) wie in Anspruch 5 beansprucht, wobei eine Leitungsdurchführung (2), die ausgestaltet ist, den Kabelbaum zu den herausführenden Anschlüssen zu sammeln und zu enthalten, auf der inneren unteren Oberfläche des Abdeckungskörpers (1) ausgebildet ist.

7. Die multifunktionale Batterieabdeckung (100) wie in Anspruch 6 beansprucht, wobei eine Mehrzahl an Lüftungsöffnungen (9) auf dem Abdeckungskörper (1) vorhanden ist.

8. Ein Power-Batterie-Pack (17) umfassend eine Batteriebox (10) und eine Mehrzahl an einzelnen Batteriezellen (11), fixiert in der Batteriebox (10), wobei das Power-Batterie-Pack (17) des Weiteren die multifunktionale Batterieabdeckung (100) wie in einem der Ansprüche 1 bis 7 beansprucht umfasst.

9. Das Power-Batterie-Pack (17) wie in Anspruch 8 beansprucht, wobei eine Mehrzahl an Befestigungsbolzenlöchern (8) auf der multifunktionalen Batterieabdeckung (100) ausgebildet ist und die multifunktionale Batterieabdeckung (100) auf der Batteriebox (10) durch eine Mehrzahl an Befestigungsbolzen (15) befestigt ist.

10. Das Power-Batterie-Pack (17) wie in Anspruch 9 beansprucht, wobei jede zwei benachbarten einzelnen Batteriezellen (11) durch ein Batterie-Verbindungselement (13) verbunden sind, um die erforderliche Betriebskapazität des Batteriepacks (17) zwischen den Batterien zu bilden.

11. Das Power-Batterie-Pack (17) wie in Anspruch 10 beansprucht, wobei das Batterie-Verbindungselement (13) ein T-förmiges Batterie-Verbindungsstück ist, die horizontale Kante des T-förmigen Batterie-Verbindungsstücks ausgestaltet ist, sich mit zwei Fixierungssäulen (12) der einzelnen Batteriezelle (11) zu verbinden, und ausgestaltet ist, die große Stromstärke des Batteriepacks (17) durch die Befestigung der Mutter (14) zu tragen; die vertikale Kante des T-förmigen Batterie-Verbindungsstücks herausgeführt wird, um auf das leitfähige elastische Verbindungselement der multifunktionalen Batterieabdeckung (100) gepresst zu werden, um das Signal an die herausführenden Anschlüsse (3) der multifunktionalen Batterieabdeckung (100) zu senden, um das Detektionssignal der einzelnen Batteriezelle (11) bereitzustellen und/oder Stromausgleich während des Ladens zu erreichen.

12. Das Power-Batterie-Pack (17) wie in einem der Ansprüche 8 bis 11 beansprucht, wobei eine Batterie-Fixierungsanbringung (16) auf der multifunktionalen Batterieabdeckung (100) ausgebildet ist; wobei die Batterie-Fixierungsanbringung (16) gegen die einzelne Batteriezelle (11) des Batteriepacks (17) an ihrer Oberseite drückt.

13. Das Power-Batterie-Pack (17) wie in Anspruch 12 beansprucht, wobei die Batterie-Fixierungsanbringung (16) unter der multifunktionalen Batterieabdeckung (100) befestigt ist und in die einzelne Batteriezelle (11) der Batteriebox (10) eingebettet ist.

## Revendications

1. Couvercle de batterie multifonction (100), comprenant : un corps de couvercle (1), une pluralité de bornes de sortie (3) disposées sur le corps de couvercle (1), et au moins une unité de collecte de signaux électriques, une extrémité d'entrée de chaque unité de collecte de signaux électriques est reliée à un élément de batterie unique (11) dans le bloc-batterie (17), une extrémité de sortie de chaque unité de collecte de signaux électriques est reliée à l'une des bornes de sortie (3), les bornes de sortie (3) sont toutes reliées à un système de gestion de batterie, et sont utilisées pour transmettre des informations de tension collectées du bloc-batterie (17) au système de gestion de batterie ;
dans lequel l'unité de collecte de signaux électriques comprend au moins : un câble (2) et un connecteur élastique conducteur pour se relier à l'élément de batterie unique (11), où une extrémité du connecteur élastique conducteur est reliée électriquement au câble (2), l'autre extrémité du connecteur élastique conducteur est reliée électriquement à l'élément de batterie unique (11) ;
dans lequel le corps de couvercle (1) est un corps de couvercle isolant multicouche, le câble (2) est configuré à l'intérieur du corps de couvercle (1).

2. Couvercle de batterie multifonction (100) tel que revendiqué dans la revendication 1, dans lequel le connecteur élastique conducteur comprend une feuille de liaison élastique (6).

3. Couvercle de batterie multifonction (100) tel que revendiqué dans la revendication 2, dans lequel le connecteur élastique conducteur comprend en outre un ressort de liaison (7) qui est en parallèle avec la feuille de liaison élastique (6).

4. Couvercle de batterie multifonction (100) tel que revendiqué dans la revendication 3, dans lequel le ressort de liaison (7) est pressé sur la colonne de fixation correspondante (12) de l'élément de batterie unique (11) afin que le câblage électrique puisse former une liaison électrique.

5. Couvercle de batterie multifonction (100) tel que revendiqué dans l'une des revendications 1 à 4, dans lequel la pluralité de bornes de sortie (3) comprennent une pluralité de ports de collecte de signaux électriques (22) et une pluralité de ports de collecte de signaux d'égalisation de courant (21), chaque port de collecte de signaux électriques (22) comprend en outre un fusible (5), deux extrémités de chaque fusible (5) sont reliées à chaque port de collecte de signaux d'égalisation de courant (21) et à un port de collecte de signaux électriques correspondant (22), de sorte que les bornes de sortie du couvercle de batterie multifonction (100) envoient les signaux électriques collectés de chaque élément de batterie (11) dans le bloc-batterie (17) au port correspondant du système de gestion de batterie externe, obtenant ainsi une détection de tension et une commande d'égalisation de courant pendant la charge.

6. Couvercle de batterie multifonction (100) tel que revendiqué dans la revendication 5, dans lequel un chemin de câbles (2) configuré pour contenir et collecter le faisceau de câblage aux bornes de sortie est formé sur la surface inférieure interne du corps de couvercle (1).

7. Couvercle de batterie multifonction (100) tel que revendiqué dans la revendication 6, dans lequel une pluralité d'évents (9) sont configurés sur le corps de couvercle (1).

8. Bloc-batterie d'alimentation (17) comprenant un boîtier de batterie (10) et une pluralité d'éléments de batterie uniques (11) fixés dans le boîtier de batterie (10), où le bloc-batterie d'alimentation (17) comprend en outre le couvercle de batterie multifonction (100) tel que revendiqué dans l'une quelconque des revendications 1 à 7.

9. Bloc-batterie d'alimentation (17) tel que revendiqué dans la revendication 8, dans lequel une pluralité de trous de boulon de fixation (8) sont configurés sur le couvercle de batterie multifonction (100) et le couvercle de batterie multifonction (100) est fixé sur le boîtier de batterie (10) par une pluralité de boulons de fixation (15).

10. Bloc-batterie d'alimentation (17) tel que revendiqué dans la revendication 9, dans lequel chaque deux éléments de batterie uniques (11) adjacents sont reliés par un connecteur de batterie (13), pour former la capacité de service requise du bloc-batterie (17) entre les batteries.

11. Bloc-batterie d'alimentation (17) tel que revendiqué dans la revendication 10, dans lequel le connecteur de batterie (13) est une pièce de liaison de batterie en forme de T, le bord horizontal de la pièce de liaison de batterie en forme de T est configuré pour se relier à deux colonnes de fixation (12) de l'élément de batterie unique (11), et est configuré pour supporter un courant élevé du bloc-batterie (17) par la fixation de l'écrou (14) ; le bord vertical de la pièce de liaison de batterie en forme de T est amené à sortir pour être pressé sur le connecteur élastique conducteur du couvercle de batterie multifonction (100), pour envoyer le signal aux bornes de sortie (3) du couvercle de batterie multifonction (100) pour fournir le signal de détection de l'élément de batterie unique (11) et/ou pour obtenir une égalisation de courant pendant la charge.

12. Bloc-batterie d'alimentation (17) tel que revendiqué dans l'une quelconque des revendications 8 à 11, dans lequel une monture fixe de batterie (16) est configurée sur le couvercle de batterie multifonction (100) ;
la monture fixe de batterie (16) s'appuie contre l'élément de batterie unique (11) du bloc-batterie (17) au niveau de sa partie supérieure.

13. Bloc-batterie d'alimentation (17) tel que revendiqué dans la revendication 12, dans lequel la monture fixe de batterie (16) est fixée sous le couvercle de batterie multifonction (100) et est intégrée dans l'élément de batterie unique (11) du boîtier de batterie (10).
